# EUROPEAN PATENT APPLICATION

(11) **EP 4 527 891 A1**
(43) Date of publication of application: **26.03.2025**
(21) Application number: 23807454.6
(22) Date of filing: 02.05.2023
(51) Int. Cl.: C08L 67/04, C08L 23/00

(54) **PELLET, PELLET MANUFACTURING METHOD, COMPOSITION/MOLDED BODY MANUFACTURING METHOD USING PELLET, AND PELLET MANUFACTURING COMPOSITION**

(30) Priority: 16.05.2022 JP 2022080277
(71) Applicant: Sumitomo Chemical Company, Limited, Tokyo 103-6020 (JP); Newlight Technologies, Inc., Huntington Beach CA 92647 (US)
(72) Inventor: SHIMANO Mitsuyoshi, Ichihara-shi, Chiba 299-0195 (JP); FUKURODA Hiroshi, Ichihara-shi, Chiba 299-0195 (JP)
(74) Representative: Vossius & Partner Patentanwälte Rechtsanwälte mbB
(86) International application number: PCT/JP2023/017183
(87) International publication number: WO 2023/223849

(57) **Abstract**

The pellet contains an olefin-based polymer A and a polymer B. The polymer B is a polyhydroxyalkanoate-based polymer having a melting point of 150 °C or higher. A scanning electron microscope observation image of a cross-section including the center of the pellet and is parallel to the axis of the pellet satisfies the following requirements (1) and (2).
Requirement (1): The olefin-based polymer A is a dispersed phase, and the polymer B is a continuous phase.
Requirement (2): In an observation area of 1200 µm², three or more dispersed phases having a length of 5 µm or more in the direction of the axis of the pellet are observed.

## Description

### Technical Field

The present invention relates to a pellet, a method for producing a pellet, a method for producing a composition / molded article using a pellet, and a composition for producing a pellet.

### Background art

Resin compositions containing an olefin-based polymer and a polyhydroxyalkanoate-based polymer have been known. Patent Literature 1 discloses that pellets of the resin composition are manufactured by extrusion molding in order to mold the resin composition with a molding machine.

### Citation List

### Patent Literature

Patent Literature 1: JP2006-77063A

### Summary of Invention

### Technical Problem

However, the inventors of the present invention have found that when a composition containing a polyhydroxyalkanoate-based polymer and an olefin-based polymer is extruded into a strand from a die hole and then the strand is cut to obtain a pellet, the strand is easily broken and stable production of the pellet is difficult.

It is an object of the present invention to provide a pellet or the like which contains a polyhydroxyalkanoate-based polymer and can be produced stably.

### Solution to Problem

[1] A pellet comprising an olefin-based polymer A and a polymer B, wherein:
   the polymer B is a polyhydroxyalkanoate-based polymer having a melting point of 150°C or higher, and
   a scanning electron microscope observation image of a cross-section that includes the center of the pellet and is parallel to the axis of the pellet satisfies the following requirements (1) and (2):
      Requirement (1): The olefin-based polymer A is a dispersed phase, and the polymer B is a continuous phase.
      Requirement (2): In an observation area of 1200 µm², three or more dispersed phases of the olefin-based polymer A, each having a length of 5 µm or more in the direction of the axis of the pellet, are observed.
[2] The pellet according to [1], wherein the content of the olefin-based polymer A is 1 to 49 parts by mass and the content of the polymer B is 51 to 99 parts by mass with respect to a total of 100 parts by mass of the olefin-based polymer A and the polymer B.
[3] The pellet according to [1] or [2], wherein the melt mass flow rate of the olefin-based polymer A measured under the conditions of a temperature of 190°C and a load of 2.16 kgf is defined as MFR(A), and the melt mass flow rate of the polymer B measured under the conditions of a temperature of 190°C and a load of 2.16 kgf is defined as MFR(B), and MFR(A)/MFR(B) is 1.5 or more.
[4] The pellet according to anyone of [1] to [3], wherein MFR (A) / MFR (B) is 5.5 or more.
[5] A method for producing a pellet comprising an olefin-based polymer A and a polymer B, the polymer B being a polyhydroxyalkanoate-based polymer having a melting point of 150°C or higher, and a scanning electron microscope observation image of a cross-section that includes the center of the pellet and is parallel to the axis of the pellet satisfying the following requirements (1) and (2),
   the method comprising a step of melt-kneading the olefin-based polymer A and the polymer B at a temperature of 150 to 210°C:
   Requirement (1): The olefin-based polymer A is a dispersed phase, and the polymer B is a continuous phase.
   Requirement (2): In an observation area of 1200 µm², three or more dispersed phases of the olefin-based polymer A, each having a length of 5 µm or more in the direction of the axis of the pellet, are observed.
[6] The method according to [5], wherein the melt mass flow rate of the olefin-based polymer A measured under the conditions of a temperature of 190°C and a load of 2.16 kgf is defined as MFR(A), and the melt mass flow rate of the polymer B measured under the conditions of a temperature of 190°C and a load of 2.16 kgf is defined as MFR(B), and MFR(A)/MFR(B) is 1.5 or more.
[7] A method for producing a composition, the method comprising a step of melt-kneading a pellet and an olefin-based polymer C at a temperature of 150 to 210°C, wherein:
   the pellet comprises an olefin-based polymer A and a polymer B,
   the polymer B is a polyhydroxyalkanoate-based polymer having a melting point of 150°C or higher, and
   a scanning electron microscope observation image of a cross-section that includes the center of the pellet and is parallel to the axis of the pellet satisfies the following requirements (1) and (2):
      Requirement (1): The olefin-based polymer A is a dispersed phase, and the polymer B is a continuous phase.
      Requirement (2): In an observation area of 1200 µm², three or more dispersed phases of the olefin-based polymer A, each having a length of 5 µm or more in the direction of the axis of the pellet, are observed.
[8] The method according to [7], wherein the melt mass flow rate of the olefin-based polymer A measured under the conditions of a temperature of 190°C and a load of 2.16 kgf is defined as MFR(A), and the melt mass flow rate of the polymer B measured under the conditions of a temperature of 190°C and a load of 2.16 kgf is defined as MFR(B), and MFR(A)/MFR(B) is 1.5 or more.
[9] A method for producing a molded article, the method comprising the steps of:
   mixing a pellet and an olefin-based polymer C to obtain a mixture, and
   molding the mixture, wherein:
      the pellet comprises an olefin-based polymer A and a polymer B,
      the polymer B is a polyhydroxyalkanoate-based polymer having a melting point of 150°C or higher, and
      a scanning electron microscope observation image of a cross-section that includes the center of the pellet and is parallel to the axis of the pellet satisfies the following requirements (1) and (2):
         Requirement (1): The olefin-based polymer A is a dispersed phase, and the polymer B is a continuous phase.
      Requirement (2): In an observation area of 1200 µm², three or more dispersed phases of the olefin-based polymer A, each having a length of 5 µm or more in the direction of the axis of the pellet, are observed.
[10] The method according to [9], wherein the melt mass flow rate of the olefin-based polymer A measured under the conditions of a temperature of 190°C and a load of 2.16 kgf is defined as MFR(A), and the melt mass flow rate of the polymer B measured under the conditions of a temperature of 190°C and a load of 2.16 kgf is defined as MFR(B), and MFR(A)/MFR(B) is 1.5 or more.
[11] A composition comprising an olefin-based polymer A and a polymer B, wherein:
   the polymer B is a polyhydroxyalkanoate-based polymer having a melting point of 150°C or higher, and
   a cross-sectional observation image of a pellet obtained by melt-kneading the composition at 180°C to obtain a molten strand, cooling the molten strand to solidify, and cutting solidified strand to obtain a pellet satisfies the following requirements (1) and (2):
      Requirement (1): The olefin-based polymer A is a dispersed phase, and the polymer B is a continuous phase.
      Requirement (2): In an observation area of 1200 µm², three or more dispersed phases of the olefin-based polymer A, each having a length of 5 µm or more in the direction of the axis of the pellet, are observed (wherein the cross-section of the pellet includes the center of the pellet and is parallel to the axis of the pellet, and the observation image is a scanning electron microscope observation image).

### Effects of Invention

According to the present invention, pellets and the like which can be stably produced are provided.

### Brief description of the drawings

FIG. 1 is a perspective view of a columnar pellet according to an embodiment.
FIG. 2 is a schematic diagram showing a cross-section CS of the pellet of FIG. 1.
FIG. 3 is a schematic diagram showing an example of a scanning electron microscope photograph of a section CS of the pellet.
FIG. 4 is a schematic cross-sectional view of a columnar pellet according to another embodiment.

### Detailed Description of the Invention

Several embodiments of the present invention will now be described in detail. However, the present invention is not limited to the following embodiments.

### (Pellets That Can Be Used as a Masterbatch)

A pellet according to the present embodiment is a pellet containing an olefin-based polymer A and a polymer B, wherein:
the polymer B is a polyhydroxyalkanoate-based polymer having a melting point of 150 °C or higher and
a scanning electron microscope observation image of a cross-section including the center of the pellet and parallel to the axis of the pellet satisfies the following requirements (1) and (2).

Requirement (1): The olefin-based polymer A is a dispersed phase, and the polymer B is a continuous phase.
Requirement (2): In an observation area of 1200 µm², three or more dispersed phases of the olefin-based polymer A, each having a length of 5 µm or more in the direction of the axis of the pellet, are observed.

### (Shape of Pellet)

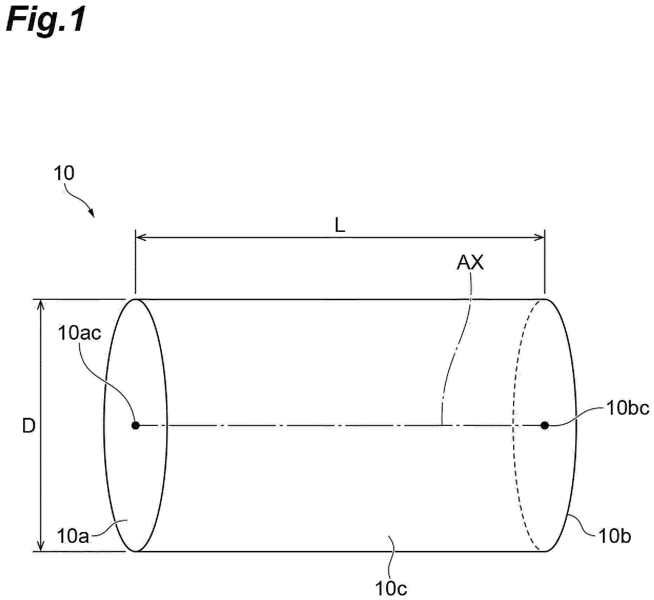

FIG. 1 shows an example of the shape of the pellet 10. The pellet 10 of this embodiment may have a columnar shape. A columnar pellet 10 is provided with two end surfaces 10a, 10b and a cylindrical peripheral surface 10c for connecting the end surfaces. A typical shape of the pellet 10 is cylindrical as shown in FIG. 1.

In the present specification, a line connecting the center 10ac of the end face 10a and the center 10bc of the end face 10b is defined as an axis AX of the columnar shape of the pellet. In the present specification, the center means a geometric center.

The length L of the axis AX of the columnar shape of the pellet 10 may be 1 to 20 mm. The diameter D of the cross-section of the pellet perpendicular to the axis AX may be 1 to 10 mm.

The cross-sectional shape of the pellet 10 perpendicular to the axis AX may not be circular, and in this case, the diameter D is a diameter equivalent to a circle of the cross-sectional area.

### <Structure of Pellet>

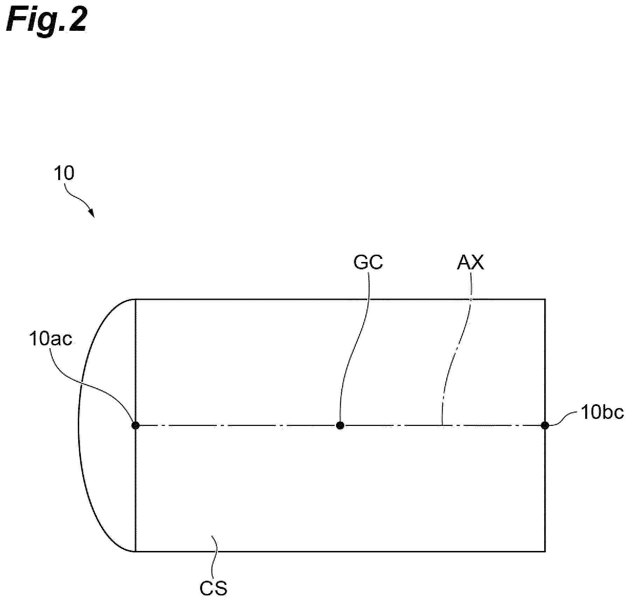

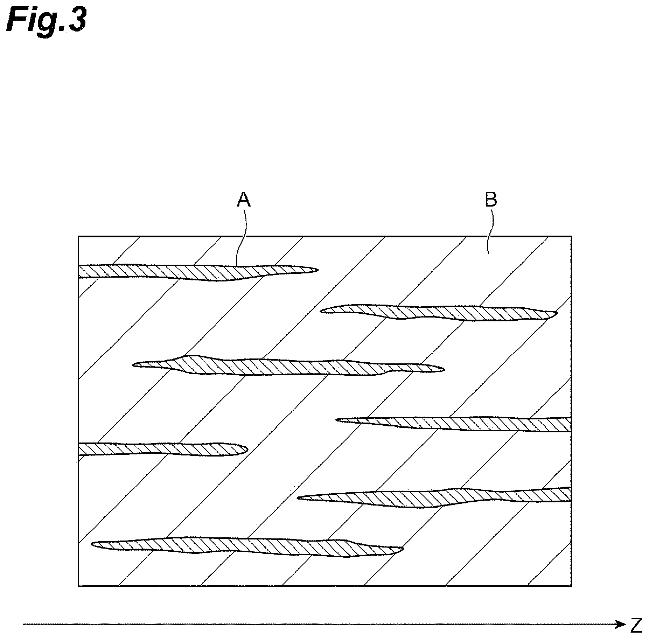

As shown in FIG. 2, an image observed by a scanning electron microscope of a cross-section CS including the center GC of the pellet 10 and parallel to the axis AX of the pellet satisfies the following requirements (1) and (2). In the present specification, the center means a geometric center. FIG. 3 is a schematic view of a scanning electron microscope photograph of the cross-section CS. The position of the observed image in the cross-section CS is preferably in the vicinity of the center GC of the pellet 10. That is, the location of the observation image in the radial direction of the cross-section CS is preferably within the range of 0 to ± 0.5 × (1/2·D) in the radial coordinate, with the axis AX as the central axis (origin), based on the radius 1/2·D of the pellet. The location of the observation image in the axial direction of the cross-section CS is preferably within the range of 0 to ± 0.5 × L in the axial coordinate, with the center GC as the origin, based on the axial length L of the pellet.

Requirement (1): The olefin-based polymer A is a dispersed phase, and the polymer B is a continuous phase. In other words, in the observed image, the pellet has a sea-island structure in which the polymer B is a continuous phase (sea portion) and the olefin-based polymer A is a dispersed phase (island portion).

Requirement (2): In an observation area of 1200 µm², three or more dispersed phases of the olefin-based polymer A, each having a length of 5 µm or more in the direction of the axis of the pellet, are observed. The number of the dispersed phases may be 5 or more, 7 or more, 10 or more, 15 or more, or 20 or more. There is no particular upper limit to the number of the dispersed phases, but it may be 100 or less, or 50 or less.

The aspect ratio L'/D' of the dispersed phase, which is defined as the ratio of the axial length L' to the length D' in the direction perpendicular to the axis AX, is 2 or more, preferably 3 or more, and more preferably 5 or more.

When the observed image of the cross-section CS satisfies the requirements (1) and (2), the elongated dispersed phase of the olefin-based polymer A can support the strands in the state of extruded from the die, thereby the breakage and entanglement of the strands before and after cooling can be suppressed.

### Composition of Pellet

In the pellet, the mass ratio of the olefin-based polymer A and the polymer B is not particularly limited, but from the viewpoint of having the above-mentioned sea-island structure, it is preferable that the content of the olefin-based polymer A is 1 to 49 parts by mass and the content of the polymer B is 51 to 99 parts by mass with respect to a total of 100 parts by mass of the olefin-based polymer A and the polymer B.

The content of the olefin-based polymer A may be 2 to 40 parts by mass and the content of the polymer B may be 60 to 98 parts by mass, the content of the olefin-based polymer A may be 3 to 35 parts by mass and the content of the polymer B may be 65 to 97 parts by mass, and the content of the olefin-based polymer A may be 5 to 30 parts by mass and the content of the polymer B may be 70 to 95 parts by mass.

The total proportion of the olefin-based polymer A and the polymer B in the entire pellet can be 50% by mass or more, preferably 60% by mass or more, and more preferably 70% by mass or more.

In the pellet, when the melt mass flow rate of the olefin-based polymer A measured under the conditions of a temperature of 190 °C and a load of 2.16 kgf is defined as MFR (A), and the melt mass flow rate of the polymer B measured under the conditions of a temperature of 190 °C and a load of 2.16 kgf is defined as MFR (B), it is preferable that MFR (A) / MFR (B) is 1.5 or more. MFR (A) / MFR (B) may be 2 or more, 3 or more, 4 or more, 5 or more, 5.5 or more, or 6 or more. Although there is no upper limit to MFR (A) / MFR (B), it may be 200 or less, or 100 or less.

### Olefin-based Polymer A

The olefin-based polymer A is a polymer containing 50 mass% or more of a structural unit derived from an olefin having 2 to 10 carbon atoms (provided that the total amount of the olefin-based polymer is 100 mass%). Examples of the olefins having 2 to 10 carbon atoms include ethylene, propylene, 1-butene, isobutene, 1-pentene, 2-methyl-1-butene, 3-methyl-1-butene, 2-methyl-1-pentene, 3-methyl-1-pentene, 4-methyl-1-pentene, 1-hexene, 1-octene, 1-nonene, 1-decene, 1-undecene, and 1-dodecene.

The olefin-based polymer A may contain a structural unit derived from a monomer other than an olefin having 2 to 10 carbon atoms. Examples of the monomers other than olefins having 2 to 10 carbon atoms include aromatic vinyl monomers such as styrene; unsaturated carboxylic acids such as acrylic acid and methacrylic acid; unsaturated carboxylic acid esters such as methyl acrylate, ethyl acrylate, butyl acrylate, methyl methacrylate and ethyl methacrylate; vinyl ester compounds such as vinyl acetate; conjugated dienes such as 1, 3-butadiene and 2-methyl-1, 3-butadiene (isoprene); and non-conjugated dienes such as dicyclopentadiene and 5-ethylidene-2-norbomene.

The olefin-based polymer A may be at least one selected from the group consisting of an ethylene-based polymer, a propylene-based polymer and a butene-based polymer, and may be a combination of any two or more of these.

The ethylene-based copolymer is a polymer containing 50 mass% or more of a structural unit derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. The ethylene-based copolymer may be a combination of two or more ethylene-based copolymers.

The ethylene-based copolymer may be an olefin-based elastomer having a monomer unit derived from an α - olefin having 3 to 20 carbon atoms and a monomer unit derived from ethylene. The content of the monomer unit derived from ethylene in the olefin-based elastomer is preferably 10 to 85% by weight (provided that the total weight of the olefin-based elastomer is 100% by weight). Examples of the α - olefin having 3 to 20 carbon atoms include propylene, 1-butene, isobutene, 1-pentene, 2-methyl-1-butene, 3-methyl-1-butene, 1-hexene, 2-methyl-1-pentene, 3-methyl-1-pentene, 4-methyl-1-pentene, 1-octene, 1-nonene, 1-decene, 1-undecene, and 1-dodecene, with propylene, 1-butene, 1-hexene, or 1-octene being preferred.

Examples of the olefin-based elastomer include ethylene-propylene copolymer elastomers, ethylene-1-butene copolymer elastomers, ethylene-1-hexene copolymer elastomers, and ethylene-1-octene copolymer elastomers. The olefin-based elastomer may be used alone or in combination of two or more. It is preferably ethylene-1-butene copolymer elastomer or ethylene-1-octene copolymer elastomer.

The polymer B may be a mixture of an olefin-based elastomer and a propylene-based polymer.

The propylene-based copolymer is a polymer containing 50% by mass or more of a structural unit derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-based copolymer may be a combination of two or more kinds of propylene-based copolymers. It is preferable that the olefin-based polymer A is a propylene-based copolymer.

The butene-based copolymer is a polymer containing 50% by mass or more of a structural unit derived from 1-butene, and examples thereof include 1-butene homopolymer, 1-butene-ethylene copolymer, 1-butene-propylene copolymer, 1-butene-1-hexene copolymer, 1-butene-1-octene copolymer, 1-butene-ethylene-propylene copolymer, 1-butene-ethylene-1-hexene copolymer, 1-butene-ethylene-1-octene copolymer, 1-butene-propylene-1-hexene copolymer, and 1-butene-propylene-1-octene copolymer. The butene-based copolymer may be a combination of two or more butene-based copolymers.

The above-mentioned olefin-based polymer A can be produced by a known polymerization method using a known polymerization catalyst.

The melt mass flow rate (MFR) of the olefin-based polymer A measured under the conditions of 190 °C and a load of 2.16 kgf according to JIS K 7210 - 2014 is preferably 0.1g/10 min or more and 200g/10 min or less. The melt mass flow rate (MFR) of the olefin-based polymer A may be 2g/10 min or more, and may be 20g/10 min or more. The melt mass flow rate (MFR) of the olefin-based polymer A may be 100g/10 min or less, and may be 60g/10 min or less.

### Polymer B

The polymer B is a polyhydroxyalkanoate-based polymer having a melting point of 150 °C or higher.

The polyhydroxyalkanoate-based polymer is a polyester of hydroxyalkanoic acid. Examples of hydroxyalkanoic acids are 2-hydroxyalkanoic acid, 3-hydroxyalkanoic acid, and 4-hydroxyalkanoic acid.

Examples of 2-hydroxyalkanoic acids include glycolic acid, lactic acid, and 2-hydroxybutyric acid. Examples of polyesters of 2-hydroxyalkanoic acids, i.e., poly (2-hydroxyalkanoate) - based polymers, include polyglycolic acid and polylactic acid.

Examples of 3-hydroxyalkanoic acids include 3-hydroxybutyric acid, 3-hydroxypropionic acid, 3-hydroxypentanoic acid, and 3-hydroxyhexanoic acid. The polyester of 3-hydroxyalkanoic acid, i.e., the poly (3-hydroxyalkanoate) - based polymer will be described in detail later.

Examples of 4-hydroxyalkanoic acids include 4-hydroxybutyric acid, 4-hydroxypentanoic acid, and 4-hydroxyhexanoic acid.

The polymer B may be a homopolymer of hydroxyalkanoic acid or a polymer of two or more hydroxyalkanoic acids.

The poly (3-hydroxyalkanoate) - based polymer is a polyhydroxyalkanoate, which is a polyester of hydroxyalkanoic acid, and necessarily contains repeating units of 3-hydroxyalkanoate represented by formula (1). In formula (1), R is a hydrogen atom, a halogen atom, an alkyl group having 1-15 carbon atoms, a cyano group, an amino group having 1-18 carbon atoms, an alkoxy group (alkyloxy group) having 1-11 carbon atoms, an amide group having 1-20 carbon atoms, an aryl group having 6-12 carbon atoms, or a monovalent heterocyclic group having 1-9 carbon atoms. These groups may have a substituent. In particular, R is preferably an alkyl group having 1 to 8 carbon atoms, an amide group having 1 to 20 carbon atoms, or an aryl group having 6 to 8 carbon atoms, from the viewpoint of compatibility with components other than the polymer B contained in the pellet (for example, the olefin-based polymer A).

[-O-CHR-CH₂-CO-] (1)

Examples of halogen atoms include F, Cl, Br, and I.

The alkyl group having 1 to 15 carbon atoms may be linear or branched. The number of carbon atoms in the alkyl group is preferably 1 to 8, and more preferably 1 to 4. Examples of alkyl groups include methyl group, ethyl group, propyl group, isopropyl group, butyl group, isobutyl group, sec-butyl group, tert-butyl group, pentyl group, isopentyl group, 2-methylbutyl group, 1-methylbutyl group, hexyl group, isohexyl group, 3-methylpentyl group, 2-methylpentyl group, 1-methylpentyl group, heptyl group, octyl group, isooctyl group, 2-ethylhexyl group, 3, 7-dimethyloctyl group, nonyl group, decyl group, undecyl group, dodecyl group, tetradecyl group, and pentadecyl group.

Examples of the amino group having 1 to 18 carbon atoms or 1 to 11 carbon atoms include an amino group, an alkylamino group, a dialkylamino group, an arylamino group, an alkylarylamino group, a benzylamino group, and a dibenzylamino group.

Examples of alkylamino groups include methylamino group, ethylamino group, propylamino group, butylamino group, pentylamino group, hexylamino group, heptylamino group, octylamino group, nonylamino group, decylamino group, dodecylamino group, isopropylamino group, isobutylamino group, isopentylamino group, sec-butylamino group, tert-butylamino group, sec-pentylamino group, tert-pentylamino group, tert-octylamino group, neopentylamino group, cyclopropylamino group, cyclobutylamino group, cyclopentylamino group, cyclohexylamino group, cycloheptylamino group, cyclooctylamino group, 1-adamantamino group, and 2-adamantamino group.

Examples of dialkylamino groups include dimethylamino group, diethylamino group, dipropylamino group, dibutylamino group, dipentylamino group, diisopropylamino group, diisobutylamino group, diisopentylamino group, methylethylamino group, methylpropylamino group, methylbutylamino group, methylisobutylamino group, dicyclopropylamino group, pyrrolidino group, piperidino group, and piperazino group.

Examples of the arylamino group include an anilino group, a 1-naphthylamino group, a 2-naphthylamino group, an o - toluidino group, an m - toluidino group, a p - toluidino group, a 1-fluoreneamino group, a 2-fluoreneamino group, a 2-thiazoleamino group, and a p-terphenylamino group.

Examples of the alkylarylamino group include an N-methylanilino group, an N-ethylanilino group, an N-propylanilino group, an N-butylanilino group, an N-isopropylanilino group, and an N-pentylanilino group.

Examples of alkoxy groups having 1 to 11 carbon atoms include methoxy group, ethoxy group, propoxy group, isopropoxy group, butoxy group, isobutoxy group, sec-butoxy group, tert-butoxy group, cyclopropoxy group, cyclobutoxy group and cyclopentoxy group.

The term "amide group" means a group obtained by removing one hydrogen atom bonded to a nitrogen atom from a carboxylic acid amide. Examples of the amide group having 1 to 20 carbon atoms include a group represented by - NH - C ( = O) - R^{A} such as a formamide group, an acetamide group, a propionamide group, a butyramide group, a benzamide group, a trifluoroacetamide group, and a pentafluorobenzamide group (wherein R^{A} is a hydrogen atom or a monovalent organic group), and a group represented by - N (- C ( = O) - R^{A}) (- C ( = O) - R^{B}) such as a diformamide group, a diacetamide group, a dipropionamide group, a dibutylamide group, a dibenzamide group, a ditrifluoroacetamide group, and a dipentafluorobenzamide group (wherein R^{A} and R^{B} are each independently a hydrogen atom or a monovalent organic group). The organic group can be an alkyl group, an alkoxy group, or an aryl group, which may be substituted with a halogen atom. Among these, the amide group is preferably a formamide group, an acetamide group, a propionamide group, a butyramide group, or a benzamide group.

Examples of the aryl group having 6 to 12 carbon atoms include a phenyl group, a tolyl group, a xylyl group, a naphthyl group, and a biphenyl group, and among these, a phenyl group, a tolyl group, and a xylyl group are more preferable.

Examples of the hetero atom of the monovalent heterocyclic group having 1 to 9 carbon atoms include N, O, and S, which may be saturated or unsaturated, and which may have a single hetero atom, a plurality of hetero atoms, or different hetero atoms. Examples of such heterocyclic groups include thienyl group, pyrrolyl group, furyl group, pyridyl group, piperidinyl group, quinolinyl group, isoquinolinyl group, pyrimidinyl group, triazinyl group, and thiazolyl group.

The repeating unit of the polymer B may be composed of only one or a plurality of 3-hydroxyalkanoates represented by formula (1), or may have one or a plurality of 3-hydroxyalkanoates represented by formula (1) and one or a plurality of other hydroxyalkanoates.

The polymer B preferably contains 50 mol% or more, more preferably 70 mol% or more, of the repeating units of 3-hydroxyalkanoate represented by formula (1) with respect to the total repeating units of hydroxyalkanoate (100 mol%).

Examples of the 3-hydroxyalkanoate represented by formula (1) are, when R is a hydrogen atom or an alkyl group represented by CₙH_{2n + 1} and n is an integer of 1-15, 3-hydroxybutyrate wherein n = 1 (hereinafter sometimes referred to as 3HB), 3-hydroxyvalerate wherein n = 2 (hereinafter sometimes referred to as 3HV), 3-hydroxyhexanoate wherein n = 3 (hereinafter sometimes referred to as 3HH), 3-hydroxyoctanoate wherein n = 5, 3-hydroxyoctadecanate wherein n = 15, and 3-hydroxypropionate wherein R is a hydrogen atom.

An example of the polymer B having only one kind of repeating unit represented by Formula (1) is poly (3-hydroxybutyrate) (hereinafter sometimes referred to as P3HB).

An example of the polymer B having only a plurality of kinds of repeating units represented by formula (1) is poly (3-hydroxybutyrate-co-3-hydroxyhexanoate) (hereinafter referred to as P3HB3HH in some cases), poly (3-hydroxybutyrate-co-3-hydroxyvalerate) (hereinafter sometimes referred to as P3HB3HV) and poly (3-hydroxybutyrate-co-3-hydroxypropionate) (hereinafter sometimes referred to as P3HB3HP).

Examples of hydroxyalkanoate other than 3-hydroxyalkanoate represented by formula (1) include repeating units represented by formula (2) (in the formula, R¹ is a hydrogen atom or an alkyl group represented by CₙH_{2n + 1}, n is an integer of 1 to 15, and m is an integer of 2 to 10). ).

[-O-CHR¹-CₘH₂ₘ₊₁-CO-] ... (2)

An example of the polymer B containing the repeating units of the formulae (1) and (2) is poly (3-hydroxybutyrate-co-4-hydroxybutyrate) (for example, the following formula (P3HB4HB)).

From the viewpoint of increasing the melting point, the repeating unit of the polymer B preferably contains at least 3-hydroxybutyrate among 3-hydroxyalkanoates represented by the formula (1).

The polymer B preferably contains a repeating unit of 3-hydroxybutyrate in an amount of 50 mol% or more, more preferably 70 mol% or more, based on the total repeating units of hydroxyalkanoate (100 mol%).

The polymer B may have two or more kinds of ester repeating units, and may be, for example, a di-polymer having two kinds of repeating units as described above, a tri-copolymer having three kinds of repeating units, and a tetra-copolymer having four kinds of repeating units.

For example, an example of a tri-copolymer may be poly (3-hydroxybutyrate-co-3-hydroxyvalerate-co-3-hydroxyhexanoate) (hereinafter referred to as (P3HB3HV3HH)). ).

As described above, the polymer B preferably contains 3-hydroxybutyrate among the repeating units of 3-hydroxyalkanoate represented by the formula (1). The proportion XX of the repeating units of 3-hydroxybutyrate is preferably 90 mol% or more, more preferably 95 mol% or more, and still more preferably 98.0 mol% or more with respect to 100 mol of the ester repeating units of all the hydroxyalkanoate.

The ratio XX is usually 100 mol% or less, preferably 99.9 mol% or less, and more preferably 99.8 mol% or less.

The mode of arrangement of the copolymer may be any of a random copolymer, an alternating copolymer, a block copolymer and a graft copolymer.

The polymer B may have ester repeating units other than those represented by formulae (1) and (2), but the main chain of the other ester repeating units does not contain an aromatic hydrocarbon structure. That is, the polymer B is an aliphatic polyester. However, it is possible that a group having an aromatic hydrocarbon group is bonded to a carbon of the main chain of the other ester repeating unit.

As described in L. Tripathi., M. C. Factories, 11,44 (2012), the composition ratio of the repeating units in the polymer B can be determined by calculation from the results of NMR measurement such as 1H-NMR and 13C-NMR.

The polymer B may be a blend of two or more polyhydroxyalkanoate-based polymers.

The weight-average molecular weight (Mw) of the polymer B can be 10,000 to 1,000,000, preferably 20000 to 800,000, and more preferably 30000 to 600,000. By setting the weight-average molecular weight (Mw) to 10,000 or more, a molded article having excellent impact strength and tensile elongation can be obtained. When the weight-average molecular weight is 500,000 or less, the dispersibility in the olefin-based polymer A is improved. The weight-average molecular weight may be 400,000 or less, 300,000 or less, 200,000 or less, or 100,000 or less. In the present specification, the weight-average molecular weight (Mw) is measured by GPC using standard polystyrene as a molecular weight standard substance.

The polymer B is preferably a thermoplastic resin and crystalline.

The melt mass flow rate (MFR (B)) of the polymer B measured under the conditions of a temperature of 190 °C and a load of 2.16 kgf according to JIS K 7210 - 2014 is preferably 0.1g/10min or more and 200g/10min or less. The MFR (B) may be 1g/10 min or more, 3g/10 min or more, 5g/10 min or more, or 7g/10 min or more. The MFR (B) may be 150g/10min or less, 100g/10 min or less, 70g/100 min or less, 50g/100 min or less, 30g/100 min or less, or 20g/100 min or less.

The polymer B has a melting point (Tm) of 150 °C or higher and may have a melting point of 155 °C or higher, 160 °C or higher, 165 °C or higher, 170 °C or higher, or 175 °C or higher. The polymer B may have a melting point (Tm) of 220 °C or lower, 200 °C or lower, or 190 °C or lower.

The melting point (Tm) of the polymer B is measured by the position of the main peak based on the melting of the crystal determined by differential scanning calorimetry (DSC) measurement in accordance with JIS K7121.

The polyhydroxyalkanoate-based polymer may be produced by a microorganism or may be derived from a compound derived from petroleum or a plant raw material (for example, a cyclic lactone).

The polyhydroxyalkanoate-based polymer may contain only D-form (R-form) of each repeating unit of hydroxyalkanoate, such as those produced from microorganisms, or may contain both D-form (R-form) and L-form (S-form) of repeating units of hydroxyalkanoate, such as those derived from a mixture of D-form (R-form) and L-form (S-form).

In the poly (3-hydroxyalkanoate) - based polymer produced from a microorganism, the repeating unit of formula (1) can be represented by the following formula. In formula (BI-1), n represents the degree of polymerization.

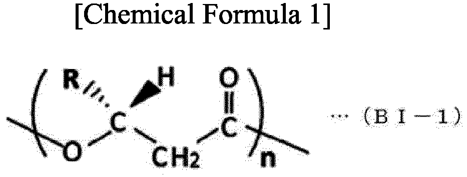

For example, poly - (3-hydroxybutyrate) produced from a microorganism has the following structure. In the formula (BI-2), n represents a degree of polymerization.

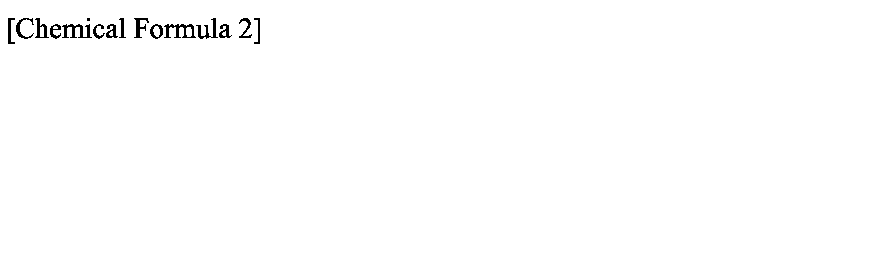

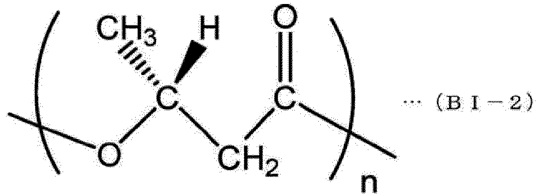

Poly - (3-hydroxybutyrate-co-3-hydroxyhexanoate) produced from a microorganism has the following structure. In the formula (BI-3), m and n represent the degree of polymerization.

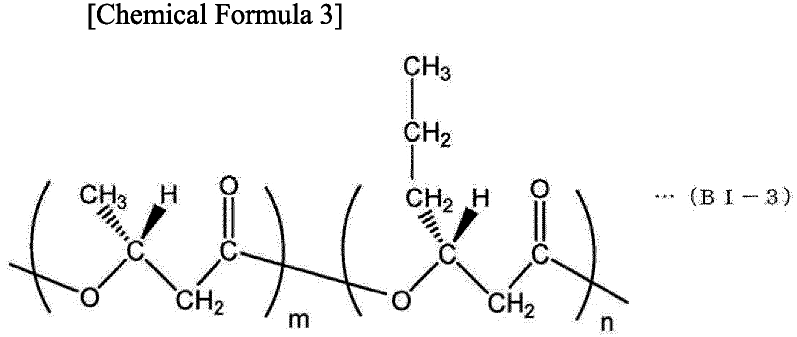

Further, poly - (3-hydroxybutyrate-co-4-hydroxybutyrate) produced from a microorganism has the following structure. In the formula (BI-4), m and n represent the degree of polymerization.

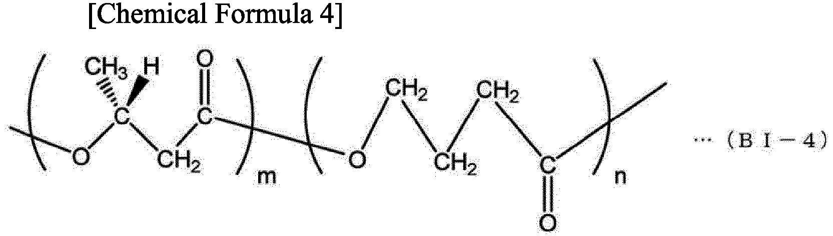

The polymer B can be biodegradable.

For example, a poly (3-hydroxyalkanoate) - based polymer can be produced by microorganisms such as Alcaligenes eutrophus AC32 strain, which has been introduced with a PHA synthase enzyme gene derived from Aeromonas caviae (international deposit under the Budapest Treaty, international depositary authority: National Institute of Advanced Industrial Science and Technology, Patent Microorganism Deposit Center(Chuo 6 Higashi 1-1-1, Tsukuba-shi, Ibaragi Prefecture, Japan), originally deposited on August 12, 1996, transferred on August 7, 1997, accession number FERMBP - 6038 (transferred from original deposit FERMP - 15786)) (J. Bacteriol., 179,4821 (1997)).

### (Additives)

The composition may optionally include additives. The additive can be at least one selected from the group consisting of a stabilizer, an antibacterial agent, an antifungal agent, a dispersant, a plasticizer, a flame retardant, a tackifying agent, a coloring agent, a metal powder, an organic powder, an inorganic fiber, an organic fiber, an organic and inorganic composite fiber, an inorganic whisker, and a filler.

Examples of the stabilizer include at least one selected from the group consisting of a lubricant, an anti-aging agent, an antioxidant, a heat stabilizer, a light-resistant agent, a weather-resistant agent, a metal deactivator, an ultraviolet absorber, a light stabilizer, and a copper inhibitor. An example of the light resistant agent is a hindered amine type light resistant agent.

Examples of the colorant include at least one selected from the group consisting of titanium oxide, carbon black, and organic pigments. An example of the metal powder is iron oxide such as ferrite.

Examples of organic powders are proteins, polyesters (except polyhydroxyalkanoate - based polymers), aromatic polyamides, cellulose, and vinylon. Examples of inorganic fibers are glass fibers and metal fibers. Examples of organic fibers are carbon fibers and aramid fibers. An example of an inorganic whisker is potassium titanate whisker.

Examples of the filler include at least one selected from the group consisting of glass powder such as glass beads, glass balloons, and glass flakes, silicate mineral, alumina, magnesium oxide, antimony oxide, barium ferrite, strontium ferrite, beryllium oxide, magnesium hydroxide, aluminum hydroxide, basic magnesium carbonate, magnesium carbonate, carbonate mineral, calcium sulfate, magnesium sulfate, basic magnesium sulfate, calcium sulfite, cadmium sulfide, asbestos, mica, calcium carbonate, talc, silica, calcium silicate, hydrotalcite, kaoline, diatomaceous earth, graphite, pumice, ebonite-powder, cotton flock, cork powder, barium sulfate, fluorine resin, cellulose powder, and wood powder.

The shape of the additive in the form of particles is not limited, and may be a plate shape, a needle shape, or a fiber shape.

From the viewpoints of the rigidity, impact resistance, and dimensional stability of the pellets or the composition, an inorganic additive is preferable, and talc which is a plate-like silicate mineral is more preferable.

The composition may contain only one or a combination of two or more of the above-mentioned additives.

In the composition, the additive may be contained in either the olefin-based polymer A or the polymer B. The additive may form a dispersed phase separate from the polymer B in the continuous phase of the olefin-based polymer A.

The number of peaks in the curve of the loss modulus E" with respect to the temperature of the composition, as determined by dynamic mechanical analysis (DMA) method, may be multiple (for example, bimodal), but it is preferable for it to be one (unimodal).

In the DMA method, a measurement sample having a thickness of 0.3 mm and cut into strips is heated stepwise from a measurement temperature of - 150 °C at a heating rate of 2 °C/min in a measurement mode of tension at a measurement frequency of 5 Hz, and the measurement is performed until the sample melts and becomes unmeasurable. The strain was in the range of 0.1% or less.

If there is only one peak in the curve, the temperature of the peak corresponds to the glass transition temperature Tg. The glass transition temperature Tg of the composition can be - 70 °C to 150 °C.

### (Skin Part)

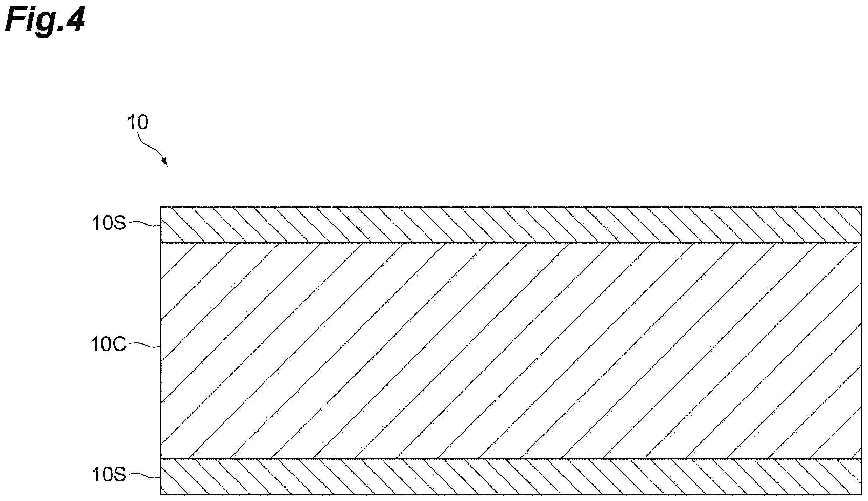

Although the embodiment has disclosed an example in which the sea-island structure (morphology) of the cross-section CS of the pellet is entirely uniform, the pellet 10 may have a core portion 10C and a cylindrical skin portion 10S provided around the core portion 10C and having a composition different from that of the core portion 10C, as shown in FIG. 4. The outer peripheral surface of the skin portion 10S is exposed on the surface of the pellet 10.

The thickness of the skin portion 10S may be 0.1 to 100 µm. The thickness of the skin portion 10S may be 1 to 10% with respect to the radius D/2 of the pellet.

In the case where the pellet 10 has the core portion 10C and the skin portion 10S, the core portion 10C has the above-described sea-island structure as shown in FIG. 3, and the observed image of the core portion 10C of the cross-section CS satisfies the above-described requirements (1) and (2).

On the other hand, in the skin portion 10S, the olefin-based polymer A is a continuous phase, and the polymer B is a dispersed phase. In the skin portion 10S, the content of the polymer B may be 1 to 49 parts by mass, and the content of the olefin-based polymer A may be 51 to 99 parts by mass with respect to a total of 100 parts by mass of the olefin-based polymer A and the polymer B.

The composition of the entire pellet can be the composition described in the embodiment having no skin portion.

If the pellet 10 has such a skin layer, it may be possible to suppress the roughness or stickiness of the surface of the strand or pellet.

### (Method for Producing Pellet)

The method for producing a pellet according to the present embodiment is a method for producing the above-described pellets.

The production method includes a step of melt-kneading the olefin-based polymer A and the polymer B at a temperature of 150 to 210 °C. Here, all of the olefin-based polymer A and the polymer B may be melt-kneaded at one time, or a part of the olefin-based polymer A and the polymer B may be melt-kneaded to obtain a pre-kneaded product, and then the rest of the olefin-based polymer A and the polymer B may be added to the pre-kneaded product and further melt-kneaded to obtain a composition.

The present embodiment further comprises a step of extruding the composition obtained by melt kneading from a die to obtain strands, a step of cooling the strands to solidify them, and a step of cutting the solidified strands. In another embodiment, the method comprises the steps of: extruding the composition obtained by melt kneading from a die to obtain strands; and cutting the strands while cooling the strands.

The strands may be solidified by contact with water or may be solidified by contact with a gas such as air, such as on a belt.

As the die, the cooling device, and the cutting device, known devices can be used.

By adjusting the mass ratio of the olefin-based polymer A to the polymer B in the composition so that the content of the olefin-based polymer A is 1-49 parts by mass and the content of the polymer B is 51-99 parts by mass relative to a total of 100 parts by mass of the olefin-based polymer A and the polymer B, the above-mentioned sea-island structure can be easily provided.

Further, by setting the MFR (A) / MFR (B) in the composition to 1.5 or more, the above-mentioned structure can be easily provided.

By setting the MFR (A) / MFR (B) in the composition to 1.5 or more, a pellet having a skin portion can be easily produced.

### (Composition Suitable for Production of Pellet)

The composition according to the present embodiment is a composition containing an olefin-based polymer A and a polymer B. The polymer B is a polyhydroxyalkanoate-based polymer having a melting point of 150 °C or higher. An observation image of a cross-section of the pellet, which are obtained by melt-kneading the composition at 180 °C to obtain a strand in a molten state, cooling the strand in a molten state to solidify the strand, and cutting the solidified strand into pellets, for example, a columnar pellet, satisfies requirements (1) and (2).
Requirement (1): The olefin-based polymer A is a dispersed phase, and the polymer B is a continuous phase.
Requirement (2): In an observation area of 1200 µm², three or more dispersed phases, each having a length of 5 µm or more in the direction of the axis of the pellet, are observed.
(Note that the cross-section of the pellet is a cross-section including the center of the pellet and parallel to the axis of the pellet, and the observed image is an image observed by a scanning electron microscope.)

The composition according to the present embodiment is a composition that, when melt-kneaded to obtain a strand in a molten state, cooled to solidify, and then cut, results in the above-mentioned columnar pellets. Accordingly, it is not necessary for the composition of the present embodiment to have the shape of a columnar pellet itself, nor is it necessary for the cross-sectional structure thereof to satisfy the requirements (1) and (2).

Specific forms of the composition include a mixture of powder of the olefin-based polymer A and the powder of polymer B, and spherical pellets of the composition containing the olefin-based polymer A and the polymer B.

The composition of this composition may be the same as the composition of the pellet described above.

### (Method of Producing Compound Using Pellet)

The method for producing a composition (compound) according to the present embodiment includes a step of melt-kneading the pellet and the olefin-based polymer C at a temperature of 150 to 210 °C to obtain a composition Y.

Examples of the olefin-based polymer C include the above-mentioned olefin-based polymers A. The olefin-based polymer A and the olefin-based polymer C in the pellet may be the same or different.

The mixing ratio of the pellets and the olefin-based polymer C is not particularly limited, and can be appropriately adjusted so that the composition of the polymer B in the obtained composition Y has a desired value.

The composition Y may optionally contain additives. The additives may be derived from the pellets or added separately from the pellets. Examples of the additive include the above-mentioned additives.

### (Method for Producing Molded Article Using Pellet)

The method for producing a molded article according to the present embodiment includes a step of mixing the pellets and the olefin-based polymer C to obtain a mixture, and a step of molding the mixture. Specifically, the step of molding the mixture is a step of supplying the mixture to a raw material supply port of a molding machine and molding the mixture by the molding machine to produce a molded article. Outside the molding machine, a mixture obtained by mixing the pellets and the olefin-based polymer C may be supplied to the raw material supply port of the molding machine. The pellets and the olefin-based polymer C may be supplied to the raw material supply port of the molding machine by using independent feeders, and the pellets and the olefin-based polymer C may be mixed at the raw material supply port.

Examples of the olefin-based polymer C include the above-mentioned olefin-based polymers A. The olefin-based polymer A and the olefin-based polymer C in the pellet may be the same or different.

The mixing ratio of the pellets and the olefin-based polymer C is not particularly limited, and can be appropriately adjusted so that the composition of the polymer B in the obtained composition has a desired value.

The mixture may optionally contain additives. The additive may be derived from the pellet, may be added separately from the pellet, or may be derived from the olefin-based polymer C. Examples of the additive include the above-mentioned additives.

In the step of mixing the pellets with the olefin-based polymer C to obtain a mixture, the pellets and the olefin-based polymer C may be mixed in a solid state instead of a molten state. In this case, the temperature at which the pellets and the olefin-based polymer C are mixed may be room temperature.

In the step of mixing the pellets and the olefin-based polymer C to obtain a mixture, the pellets and the olefin-based polymer C may be melt-kneaded at a temperature of 150 to 210 °C to obtain the composition Y.

The temperature at the time of molding can be 150 to 230 °C.

For the molding, known resin-molding methods such as an injection molding method, an extrusion molding method, a vacuum molding method, a pressure molding method, a press molding method, a foaming molding method, a blow molding method, and a rotary molding method can be used. The shape of the obtained molded article is not particularly limited.

The molded article can be widely used as a resin material.

Examples of applications of the composition of the present invention include exterior structural members, furniture and interior decorative members, house members, toy members, gardening members, automobile members, and packaging materials. Examples of the exterior member include a carport member, a fence member, a gate door member, a gatepost member, a post member, a cycle port member, a deck member, a sunroom member, a roof member, a terrace member, a handrail member, a shade member, and an awning member. Examples of the interior decoration member include a sofa member, a table member, a chair member, a bed member, a chest member, a cabinet member, and a dresser member. Examples of the household electrical appliance member include a watch member, a cellular phone member, and a white appliance member. Examples of the toy member include a plastic model member, a diorama member, and a video game body member. Examples of the gardening member include a planter member, a vase member, and a flowerpot member. Examples of the automobile member include a bumper member, an instrument panel member, and an air bag cover member. Examples of the packaging material include a packaging material for foods, a packaging material for fibers, and a packaging material for miscellaneous goods. Further, other applications include, for example, a member for a monitor, a member for equipment for office automation (OA), a member for medical use, a drain pan, a toiletry member, a bottle, a container, a member for snow removing equipment, and various members for construction.

### Example

Hereinafter, the present invention will be specifically described with reference to Examples. However, the present invention is not limited to the following examples.

In the following description, "%" and "part (s)" are by mass unless otherwise specified. The operations described below were carried out under the conditions of normal temperature and normal pressure, unless otherwise noted.

### [Components used in Examples and Comparative Examples]

The components used in Examples and Comparative Examples are shown below.

### (Olefin-based Polymer (A-1): Propylene Homopolymer)

A propylene homopolymer (A-1) as an olefin-based polymer was produced by a liquid phase-gas phase polymerization method using a polymerization catalyst obtained by the method described in Example 1 of Japanese Patent Laid-Open No. 2004-182981. The physical properties were as follows.
Melt flow rate (190 °C, load 2.16 kgf): 51g/10min

### (Olefin-based Polymer (A-2): Propylene Homopolymer)

A propylene homopolymer (A-2) as an olefin-based polymer was produced by a liquid phase-gas phase polymerization method using a polymerization catalyst obtained by the method described in Example 1 of Japanese Patent Laid-Open No. 2004-182981. The physical properties were as follows.
Melt flow rate (190 °C, load: 2.16 kgf): 1.0g/10min

### (Polymer (B-1): poly (3-hydroxybutyrate))

### Made by Newlight Technologies

Melt flow rate (190 °C, load: 2.16 kgf): 1.6g/10min

### (Polymer (B-2): Poly (3-hydroxybutyrate))

### Made by Newlight Technologies

Melt flow rate (190 °C, load: 2.16 kgf): 7.9g/10min

The following components were used as additives.
(Additive 1)
   antioxidant, "Sumilizer GA80", manufactured by Sumitomo Chemical Co., Ltd
(Additive 2)
   antioxidant, "IRGANOX1010", manufactured by BASF
(Additive 3)
   antioxidant, "IRGAFOS168", manufactured by BASF
(Additive 4)
   cyclic carbodiimide "Carbosista TCC-NP", manufactured by Teijin
(Additive 5)
   hydrotalcite "DHT-4C" manufactured by Kyowa Chemical Industry Co., Ltd.

### [Example 1]

10 parts by weight of the olefin-based polymer (A-1), 90 parts by weight of the polymer (B-1), 0.2 parts by weight of "IRGANOX1010", 0.2 parts by weight of "IRGAFOS168", and 2.0 parts by weight of "Carbosista TCC-NP" as additives were respectively weighed, all the components were mixed and kneaded under the conditions of a barrel temperature of 180 °C and a screw rotation speed of 90 rpm using a Laboplast Mill, a biaxial kneading machine with a screw diameter of 20 mm manufactured by Toyo Seiki Seisakusho, and the molten strand extruded from the die hole was immersed in a cooling water tank to be cooled and solidified, and cut with a pelletizer to obtain pellets of the composition. The pellet had a cylindrical shape and had an axial length L of 3.4 mm and a diameter D of 1.9 mm. The MFR of the obtained pellet (composition) was 5.7g/10min.

### [Example 2]

10 parts by weight of an olefin-based polymer (A-1), 90 parts by weight of a polymer (B-2), 0.2 parts by weight of "Sumilizer GA80", 0.2 parts by weight of "IRGAFOS168", and 0.5 parts by weight of "Carbosissta TCC-NP" as additives were respectively weighed, all the components were mixed and kneaded using a single-screw kneader having a screw diameter of 40 mm manufactured by Tanabe Plastic Machinery Co., Ltd. under the conditions of a barrel temperature of 180 °C and a screw rotation speed of 35 rpm, the molten strand extruded from the die hole was immersed in a cooling water tank to be cooled and solidified, and cut with a pelletizer to obtain pellets of the composition. The motor load during operation was 16A. The pellet had a cylindrical shape and had an axial length L of 3.4 mm and a diameter D of 2.0 mm.

The MFR of the obtained pellet (composition) was 3.7g/10min.

### [Comparative Example 1]

After weighing 100 parts by weight of polymer (B-2), 0.2 parts by weight of "Sumilizer GA80", 0.2 parts by weight of "IRGAFOS 168" and 0.5 parts by weight of "Carbosista TCC-NP" as additives, all the components were mixed and kneaded using a single-screw kneader with a screw diameter of 40 mm manufactured by Tanabe Plastic Machinery Co., Ltd. under the conditions of a barrel temperature of 180 °C and a screw rotation speed of 35 rpm, the molten strand extruded from the die hole was immersed in a cooling water tank to be cooled and solidified, and cut with a pelletizer to obtain pellets of the composition. The motor load during operation was 21A. The stickiness was confirmed on the strand surface. In addition, the strands were soft and sometimes wound around the guide roll of the pelletizer. The strand (pellet) had a cylindrical shape, and had an axial length L of 3.6 mm and a diameter D of 2.5 mm. The MFR of the obtained composition was 3.0g/10min.

### [Comparative Example 2]

10 parts by weight of an olefin-based polymer (A-2), 90 parts by weight of a polymer (B-2), 0.2 parts by weight of "Sumilizer GA80", 0.2 parts by weight of "IRGAFOS168", 0.2 parts by weight of "Carbosista TCC-NP" and 0.02 parts by weight of "DHT-4C" as additives were weighed, all the components were mixed and kneaded using a single-screw kneader with a screw diameter of 40 mm manufactured by Tanabe Plastic Machinery Co., Ltd. under the conditions of a barrel temperature of 180 °C and a screw rotation speed of 35 rpm, the molten strand extruded from the die hole was immersed in a cooling water tank to be cooled and solidified, and cut with a pelletizer to obtain pellets of the composition. The motor load during operation was 20A. There were stickiness and rough skin on the strand surface, and strand breakage occurred during processing. The strand (pellet) had a cylindrical shape, and had an axial length L of 3.5 mm and a diameter D of 3.1 mm.

The MFR of the obtained composition was 5.5g/10min.

### [Evaluation]

### [Melt Flow Rate]

It was measured under the conditions of 190 °C and a load of 2.16 kgf in accordance with JIS K7210 - 1:2014 and K7210 - 2:2014.

### [Observation of Morphology of Pellet Cross-Section]

### (Sample Preparation Method)

Each of the pellets of Examples 1 and 2 and Comparative Examples 1 and 2 was embedded with an epoxy resin, a cross-section including the axes AX and the center GC of the pellet shown in FIG. 2 was formed with a ultramicrotome, and then the cross-section was dyed with RuO₄ at 60 °C for 1.5 hours. After staining, the cross-section was reformed using the ultramicrotome, followed by Pt-Pd deposition of the cross-section.

### (Equipment and Conditions)

In Example 1, observation was carried out under the following apparatus and conditions.
Equipment: Scanning electron microscope (SEM) SU8020 manufactured by Hitachi, Ltd.
Conditions: Acceleration voltage 4 kV
Observation magnification (reflection electron image): 5,000 x

In Example 2 and Comparative Examples 1 and 2, observation was carried out under the following apparatus and conditions.
Equipment: Scanning electron microscope (SEM) JSM - 7600F manufactured by JEOL, Ltd.
Conditions: Acceleration voltage 5 kV
Observation magnification (reflection electron image): 5,000 x

### [Measurement of Dispersed Phase of Olefin-based Polymer A Oriented to 5 µm or More]

The reflection electron image photograph of the cross-section taken with the scanning electron microscope had an area of 400 µm². The number of dispersed phases (islands) of the olefin-based polymer A oriented to a length of 5µm or more was counted by observing the reflection electron image photograph. This was carried out for three reflection electron image photographs in which the observation fields did not overlap, and the number of dispersed phases of the olefin-based polymer A oriented to a length of 5 um or more in an area of 1200 µm² was determined from the total number. The arithmetic average of the aspect ratios of the dispersed phases was also obtained. The dispersed phase was defined as one in which the aspect ratio L'/D' defined by the ratio of the axial length L' to the length D' in the direction perpendicular to the axis AX was 2 or more.

### [Production Stability]

In the process of cooling the molten strand extruded from the die hole in the cooling water tank and cutting and pelletizing the strand with a pelletizer, the case where continuous production is possible without any trouble was indicated as "O", and the case where a trouble of strand breakage occurs between the die hole and the cooling water tank was indicated as "X".

### [Strand Cooling and Solidification property]

The case where the strands cooled and solidified in the cooling water tank could be cut and pelletized by the pelletizer without any trouble is indicated as "O", and the case where the strands were soft even after cooling and wound around the guide roll of the pelletizer is indicated as "X".

### [Strand Surface Condition]

A case in which no roughness was observed on the surface of the strand solidified in the cooling water tank was indicated as "O", and a case in which roughness was observed was indicated as "X".

### [Strand Surface Condition]

A case where the surface of the strand solidified in the cooling water tank was not found to be sticky was indicated "O", and a case where the surface was found to be sticky was indicated "X".

### The results and conditions are shown in Table 1.

**[Table 1]**

| Table 1 | | | Unit | Example 1 | Example 2 | Comparative Example 1 | Comparative Example 2 |
|---|---|---|---|---|---|---|---|
| Mixture | Propylene-based polymer A | (A-1) | Mass part | 10 | 10 | | |
| | | (A-2) | Mass part | | | | 10 |
| | Polymer B | (B-1) | Mass part | 90 | | | |
| | | (B-2) | Mass part | | 90 | 100 | 90 |
| | MFR ratio (A) / (B) | | - | 31.9 | 6.5 | - | 0.1 |
| Physical property | MFR 190 °C 21N | | g/10 min | 5.7 | 3.7 | 3.0 | 5.5 |
| | Continuous phase | | | Polymer B | Polymer B | Polymer B | Polymer B |
| | Dispersed phase (domain) | | | Polymer A | Polymer A | - | Polymer A |
| | Dispersion state (number of domains with length of 5µ m or more) | | pieces | 24 | 22 | 0 | 2 |
| | Aspect ratio (average) | | - | 16.3 | 20.7 | - | 8.0 |
| Production status | Production stability | | - | ○ | ○ | ○ | X |
| | Strand cooling solidification property | | - | ○ | ○ | X | - |
| | Strand surface roughness | | - | ○ | ○ | ○ | X |
| | Strand stickiness | | - | ○ | ○ | X | X |

In Example 1 and Example 2 satisfying Requirement 1 and Requirement 2, breakage of the strand and winding of the strand around the guide roll were suppressed, and stable production of pellets was possible. Further, in Examples 1 and 2, a skin layer in which the dispersed phase was polymer B and the continuous phase was olefin-based polymer A was confirmed on the peripheral surface of the pellet and the strand. In Examples 1 and 2, no strand surface roughness or stickiness was confirmed.

### [Description of Reference Numerals]

10 ··· pellet, AX ··· axis, CS ··· cross-section, GC ··· center.

## Claims

1. A pellet comprising an olefin-based polymer A and a polymer B, wherein:
the polymer B is a polyhydroxyalkanoate-based polymer having a melting point of 150 °C or higher, and
a scanning electron microscope observation image of a cross-section that includes the center of the pellet and is parallel to the axis of the pellet satisfies the following requirements (1) and (2):
Requirement (1): The olefin-based polymer A is a dispersed phase, and the polymer B is a continuous phase.
Requirement (2): In an observation area of 1200 µm², three or more dispersed phases of the olefin-based polymer A, each having a length of 5 µm or more in the direction of the axis of the pellet, are observed.

2. The pellet according to claim 1, wherein the content of the olefin-based polymer A is 1 to 49 parts by mass and the content of the polymer B is 51 to 99 parts by mass with respect to a total of 100 parts by mass of the olefin-based polymer A and the polymer B.

3. The pellet according to claim 1 or 2, wherein the melt mass flow rate of the olefin-based polymer A measured under the conditions of a temperature of 190°C and a load of 2.16 kgf is defined as MFR(A), and the melt mass flow rate of the polymer B measured under the conditions of a temperature of 190°C and a load of 2.16 kgf is defined as MFR(B), and MFR(A)/MFR(B) is 1.5 or more.

4. The pellet according to claim 1 or 2, wherein MFR (A) / MFR (B) is 5.5 or more.

5. A method for producing a pellet comprising an olefin-based polymer A and a polymer B, the polymer B being a polyhydroxyalkanoate-based polymer having a melting point of 150°C or higher, and a scanning electron microscope observation image of a cross-section that includes the center of the pellet and is parallel to the axis of the pellet satisfying the following requirements (1) and (2),
the method comprising a step of melt-kneading the olefin-based polymer A and the polymer B at a temperature of 150 to 210°C:
Requirement (1): The olefin-based polymer A is a dispersed phase, and the polymer B is a continuous phase.
Requirement (2): In an observation area of 1200 µm², three or more dispersed phases of the olefin-based polymer A, each having a length of 5 µm or more in the direction of the axis of the pellet, are observed.

6. The method according to claim 5, wherein the melt mass flow rate of the olefin-based polymer A measured under the conditions of a temperature of 190°C and a load of 2.16 kgf is defined as MFR(A), and the melt mass flow rate of the polymer B measured under the conditions of a temperature of 190°C and a load of 2.16 kgf is defined as MFR(B), and MFR(A)/MFR(B) is 1.5 or more.

7. A method for producing a composition, the method comprising a step of melt-kneading a pellet and an olefin-based polymer C at a temperature of 150 to 210°C, wherein:
the pellet comprises an olefin-based polymer A and a polymer B,
the polymer B is a polyhydroxyalkanoate-based polymer having a melting point of 150°C or higher, and
a scanning electron microscope observation image of a cross-section that includes the center of the pellet and is parallel to the axis of the pellet satisfies the following requirements (1) and (2):
Requirement (1): The olefin-based polymer A is a dispersed phase, and the polymer B is a continuous phase.
Requirement (2): In an observation area of 1200 µm², three or more dispersed phases of the olefin-based polymer A, each having a length of 5 µm or more in the direction of the axis of the pellet, are observed.

8. The method according to claim 7, wherein the melt mass flow rate of the olefin-based polymer A measured under the conditions of a temperature of 190°C and a load of 2.16 kgf is defined as MFR(A), and the melt mass flow rate of the polymer B measured under the conditions of a temperature of 190°C and a load of 2.16 kgf is defined as MFR(B), and MFR(A)/MFR(B) is 1.5 or more.

9. A method for producing a molded article, the method comprising the steps of:
mixing a pellet and an olefin-based polymer C to obtain a mixture, and
molding the mixture, wherein:
the pellet comprises an olefin-based polymer A and a polymer B,
the polymer B is a polyhydroxyalkanoate-based polymer having a melting point of 150°C or higher, and
a scanning electron microscope observation image of a cross-section that includes the center of the pellet and is parallel to the axis of the pellet satisfies the following requirements (1) and (2):
Requirement (1): The olefin-based polymer A is a dispersed phase, and the polymer B is a continuous phase.
Requirement (2): In an observation area of 1200 µm², three or more dispersed phases of the olefin-based polymer A, each having a length of 5 µm or more in the direction of the axis of the pellet, are observed.

10. The method according to claim 9, wherein the melt mass flow rate of the olefin-based polymer A measured under the conditions of a temperature of 190°C and a load of 2.16 kgf is defined as MFR(A), and the melt mass flow rate of the polymer B measured under the conditions of a temperature of 190°C and a load of 2.16 kgf is defined as MFR(B), and MFR(A)/MFR(B) is 1.5 or more.

11. A composition comprising an olefin-based polymer A and a polymer B, wherein:
the polymer B is a polyhydroxyalkanoate-based polymer having a melting point of 150 °C or higher, and
a cross-sectional observation image of a pellet obtained by melt-kneading the composition at 180°C to obtain a molten strand, cooling the molten strand to solidify, and cutting solidified strand to obtain a pellet satisfies the following requirements (1) and (2):
Requirement (1): The olefin-based polymer A is a dispersed phase, and the polymer B is a continuous phase.
Requirement (2): In an observation area of 1200 µm², three or more dispersed phases of the olefin-based polymer A, each having a length of 5 µm or more in the direction of the axis of the pellet, are observed (wherein the cross-section of the pellet includes the center of the pellet and is parallel to the axis of the pellet, and the observation image is a scanning electron microscope observation image).
